# EUROPEAN PATENT APPLICATION

(11) **EP 3 540 367 A1**
(43) Date of publication of application: **18.09.2019**
(21) Application number: 17884594.7
(22) Date of filing: 14.12.2017
(51) Int. Cl.: G01B 11/00, G01B 11/26, G02B 3/00, G02B 3/06

(54) **MARKER**

(30) Priority: 22.12.2016 JP 2016250118
(71) Applicant: Enplas Corporation, Kawaguchi-shi, Saitama 332-0034 (JP)
(72) Inventor: SASAKI Ryo, Kawaguchi-shi Saitama 332-0034 (JP); KAWAMOTO Yuta, Kawaguchi-shi Saitama 332-0034 (JP); SAITO Tomohiro, Kawaguchi-shi Saitama 332-0034 (JP)
(74) Representative: J A Kemp
(86) International application number: PCT/JP2017/044923
(87) International publication number: WO 2018/116954

(57) **Abstract**

The present invention provides a marker capable of reducing noises other than a detection target image. The marker (100) of the present invention includes a lens main body (101) that includes multiple lens units (102) and a substrate (106). The lens units (102) are arranged successively in a planar direction. The lens main body (101) has lens portions (103) on one surface side and has multiple detectable portions (105) that can be detected from the one surface side on the other surface side. The lens main body (101) is arranged on the substrate (106). The marker (100) further includes a non-scattering layer (108) between a surface of the substrate (106) on the lens main body (101) side and a surface of the lens main body (101) on the substrate (106) side.

## Description

### TECHNICAL FIELD

The present invention relates to a marker.

### BACKGROUND ART

In the fields of augmented reality (also referred to as "AR" hereinafter), robotics, etc., a so-called visual marker is used to recognize the position, the orientation, and the like of an object. As an example of such a marker, there has been reported a marker that includes a lenticular lens arranged on a black stripe pattern (Patent Literature 1).

The lenticular lens generally is a lens body composed of cylindrical lenses arranged successively. Each of the cylindrical lenses has a structure obtained by dividing a cylinder in the axial direction and has a convex portion extending along the axial direction. In the lenticular lens, the cylindrical lenses are arranged in such a manner that the axial directions thereof are parallel with each other. In the above-described marker, the lenticular lens is arranged on the stripe pattern in such a manner that the axial directions of the cylindrical lenses are parallel with the directions in which the black lines of the stripe pattern extend and the pitch of the cylindrical lenses is different from the pitch of the lenticular lens. With such a configuration, when the marker is recognized visually with a camera or the like from the convex portion side of the lenticular lens, the pattern projected on the lenticular lens is detected as an image that moves or deforms depending on the viewing direction. Accordingly, the viewing direction can be recognized from the detected image, and therefore, the position, the orientation, and the like of the object can be recognized as mentioned above.

### Citation List

### Patent Literature

Patent Literature 1: JP 2012-145559 A

### SUMMARY OF INVENTION

### Technical Problem

However, when an image appearing on the marker is checked, a ghost image may be detected as noise at a different position in addition to a detection target image. The color of the ghost image is, for example, paler than that of the detection target image. However, when optical detection is performed using a detection device or the like, this ghost image may be detected as noise, and the detection accuracy may be reduced.

Hence, the present invention is intended to provide a marker capable of preventing generation of noises other than a detection target image.

### Solution to Problem

In order to achieve the aforementioned object, the marker of the present invention includes: a lens main body including multiple lens units; and a substrate. The lens units have the respective lens portions and are arranged successively in a planar direction of the lens main body. The lens main body has the lens portions on one surface side and has multiple detectable portions that can be detected from the one surface side on the other surface side. The lens main body is arranged on the substrate, and the marker further includes a non-scattering layer between a surface of the substrate on the lens main body side and a surface of the lens main body on the substrate side.

### Advantageous Effects of Invention

The marker of the present invention includes the non-scattering layer between the lens main body and the substrate. Thus, generation of a ghost image as a noise such as mentioned above can be prevented, or the density (saturation) of the color of the ghost image can be reduced. Thus, the marker of the present invention can further improve detection accuracy.

### BRIEF DESCRIPTION OF DRAWINGS

FIGs. 1A and 1C are schematic views illustrating an example marker according to the first embodiment. FIG. 1A is a top view of the marker. FIG. 1B is a bottom view of the marker. FIG. 1C is a cross-sectional view of the marker as viewed in the arrow direction of line I-I in FIG. 1A.
FIG. 2 is a cross-sectional view illustrating an example position of a detectable portion in the marker according to the first embodiment.
FIG. 3 shows results of Example 1 and is a photograph for checking detection target lines and ghost lines in each marker.

### DESCRIPTION OF EMBODIMENTS

The marker of the present invention may be configured such that, for example, the lens main body has multiple recesses on the other surface side, and the detectable portions are provided inside the respective recesses.

The marker of the present invention is configured such that, for example, the non-scattering layer is at least one selected from the group consisting of an air layer, a water layer, and a transparent member layer.

The marker of the present invention is configured such that, for example, the transparent member layer is a transparent resin layer.

The marker of the present invention is configured such that, for example, the thickness of the non-scattering layer is 0.4 times or more a focal length of each lens unit.

The marker of the present invention is configured such that, for example, the thickness of the non-scattering layer is 2 times or more a focal length of each lens unit.

The marker of the present invention is configured such that, for example, the lens units are each a cylindrical lens.

The marker of the present invention may be configured such that, for example, the lens main body is an integrally molded article of the lens units.

The marker of the present invention may be configured such that, for example, the lens main body is an injection molded article.

Next, embodiments of the present invention will be described with reference to the drawings. It is to be noted, however, that the present invention is by no means limited or restricted by the following embodiments. In the respective drawings, the same components/portions are given the same reference numerals. In the drawings, the structure of each component/portion may be shown in a simplified form as appropriate for convenience of illustration, and the dimension ratio and the like of each component/portion are not limited to the conditions shown in the drawings.

### [First Embodiment]

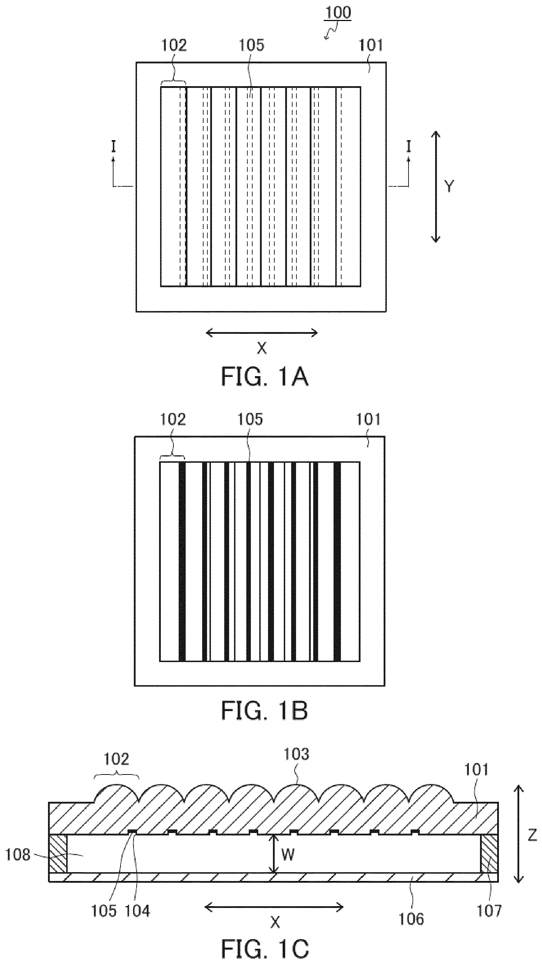

The first embodiment relates to an example marker of the present invention. FIGs. 1A to 1C show an example marker of the present embodiment. FIG. 1A is a top view of a marker 100. FIG. 1B is a bottom view of the marker 100. FIG. 1C is a cross-sectional view of the marker 100 as viewed in the arrow direction of line I-I in FIG. 1A. All of the horizontal directions in FIGs. 1A and 1C are the same.

As shown in FIGs. 1A to 1C, the marker 100 includes a lens main body 101, a substrate 106, and a spacer 107. The lens main body 101 and the substrate 106 are laminated via the spacer 107. The marker 100 includes a spacer 107 in the vicinity of the outer periphery in the planer direction, whereby a gap as a non-scattering layer 108 is provided between the lens main body 101 and the substrate 106, for example.

The lens main body 101 includes multiple lens units 102, and the lens units 102 are arranged successively in a planar direction. The direction in which the lens units 102 are arranged is referred to as an arrangement direction or a width direction, and is indicated by arrow X in FIGs. 1A and 1B. For convenience of explanation, in FIGs. 1A to 1C, the left side of the arrangement direction X is referred to as an upstream and the right side of the arrangement direction X is referred to as a downstream. Regarding the marker 100, a direction perpendicular to the arrangement direction X in the planar direction is referred to as a length direction and is indicated by arrow Y in FIG. 1A, and a direction perpendicular to the arrangement direction (width direction) X and to the length direction Y is referred to as a thickness direction and is indicated by arrow Z in FIG. 1C.

Each lens unit 102 includes a light-condensing lens portion 103 that is provided toward the arrangement direction X on one surface side of the lens main body 101, i.e., on the side of a surface located upward (upper surface) in FIG. 1C. The lens main body 101 includes multiple detectable portions 105 on the other surface side of the lens main body 101, i.e., on the side of a surface located downward (lower surface or rear surface) in FIG. 1C.

In the present invention, the light-condensing lens portion means a surface having a function of condensing light (light-condensing function). In each lens units 102, the lens portion 103 has a convex curved surface. The shape of the surface of the lens portion 103 means, for example, a surface shape in a cross section taken in the thickness direction Z, and more specifically, a surface shape in a cross section taken in the thickness direction Z along the arrangement direction (width direction) X.

The lens portion 103 needs only to be capable of condensing light, and for example, the curvature of the convex curved surface is not particularly limited. In the lens portion 103, the radius of curvature (R) of the convex curved surface in the cross section taken in the thickness direction increases from the apex of the lens portion 103 toward the lens units 102 adjacent thereto on the upstream side and the downstream side, for example. The radius of curvature (R) may increase either continuously or intermittently, for example. The radius of curvature at the apex of the lens portion 103 is from 0.25 to 1 mm, for example.

The lens unit 102 is, for example, a cylindrical lens, and in this case, the lens main body 101 also is referred to as a lenticular lens, for example.

The length of the lens unit 102 in the width direction X is, for example, 1000 µm, 500 µm, or 400 µm.

The respective lens units 102 have the same shape and the same size of the surface (also referred to as the lens surface) of the lens portion 103 on one surface side (upper surface side) of the lens main body 101, for example. In the present invention, the meaning of the term "same" encompasses, for example, not only exactly the same but also substantially the same as long as an equivalent function is exhibited.

The lens main body 101 may be formed by connecting separately prepared multiple lens units 102 or may be an integrally molded article of the lens units 102, for example. The lens main body 101 is, for example, an injection molded article. In particular, when the lens main body 101 is the above-described integrally molded article, it is preferable that the lens main body 101 is an injection molded article. In the lens main body 101, it is preferable that the lens units 102 are connected to each other tightly with no gap between adjacent lens units 102.

The lens main body 101 is, for example, a light-transmitting member. The light-transmitting member is not particularly limited, and may be formed of a resin, glass, or the like, for example. The resin may be, for example, a polycarbonate, an acrylic resin such as polymethyl methacrylate (PMMA), a cycloolefin polymer (COP), a cycloolefin copolymer (COC), or the like.

The size of the marker 100 is not particularly limited, and can be determined as appropriate depending on the number of the lens units 102, the intended use of the marker 100, and the like, for example. The size of a region composed of the lens units 102 in the lens main body 101 of the marker 100 may be such that, for example, the length in the width direction X (width) is, for example, 110 mm or 20 mm, the length in the length direction Y is, for example, 25 mm or 5 mm, and the length in the thickness direction Z (thickness) is, for example, 0.6 mm, 1 mm, or 1.7 mm.

Although FIGs. 1A and 1C show an example where the number of the lens units 102 in the lens main body 101 is eight, this example is merely illustrative and the present invention is not limited to this illustrative example. The number of the lens units 102 in the lens main body 101 is not particularly limited, and may be, for example, 221, 101, or 51.

The size of each lens unit 102 is not particularly limited, and can be determined as appropriate depending on the number of the lens units 102 in the marker 100, the intended use of the marker 100, and the like, for example. In the lens unit 102, the length in the width direction X (width) is, for example, 1000 µm, 500 µm, or 400 µm. In the lens unit 102, the length in the length direction Y is, for example, 25 mm or 5 mm. In the lens unit 102, the overall length in the thickness direction Z (the thickness) is, for example, 1 mm or 0.6 mm.

In the present invention, the "pitch of the multiple lens units" means the pitch between adjacent lens units. The pitch between each adjacent pair of lens units 102 may be uniform or nonuniform, and preferably is uniform.

The pitch between adjacent lens units 102 is, for example, the distance between apexes (the distance between ridge lines) of light-condensing lens portions 103 of adjacent lens units 102. The apex of the light-condensing lens portion 103 is, for example, the highest position in the thickness direction, and the ridge line of the light-condensing lens portion 103 is, for example, a straight line that is located at the highest position in the cross section taken in the thickness direction and extends in the length direction Y. The pitch between the adjacent lens units 102 is, for example, the same as the width of the lens unit 102.

As mentioned above, the lens main body 101 has multiple detectable portions 105 on the other surface side of the lens main body 101, i.e., on the side of a surface located downward (lower surface) in FIG. 1C. In FIG. 1C, the detectable portions 105 are lines that extend along the length direction Y of the lens main body 101, and a stripe pattern is formed by the lines. The detectable portions 105 are projected on the upper surface side of the lens main body 101 as optically detectable images and can be detected optically, for example.

The detectable portions 105 are arranged such that, for example, they are located on the inner side of the lens main body 101 relative to the exposed surface of the other surface (lower surface) of the lens main body 101. Specifically, as shown in FIG. 1C, for example, the other surface of the lens main body 101 has recesses 104, and the detectable portions 105 are arranged in the respective recesses 104.

In the lens main body 101, the size, the shape, and the like of each recess 104 can be set, as appropriate, according to each detectable portion 105, for example. The depth of each recess 104, i.e., the length of the inside of each recess 104 in the thickness direction Z is not particularly limited and is, for example, 5 to 30 µm.

The length of each detectable portion 105 in the width direction X (width) is not particularly limited and is, for example, 20 to 50 µm, and the length of each detectable portion 105 in the thickness direction Z (thickness) is not particularly limited and is, for example 1 to 10 µm. The thickness of each detectable portion 105 is, for example, shorter than the depth of each recess 104. In this case, it can be said that the surface of each detectable portion 105 on the substrate 106 side is located on the inner side of the lens main body 101 relative to the exposed surface of the other surface (lower surface) of the lens main body 101, for example.

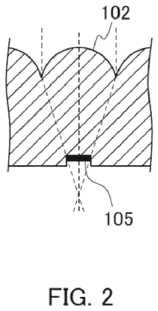

In the lens main body 101, the position of each detectable portion 105 in the thickness direction is not particularly limited. Each detectable portion 105 is arranged above the focal point of each lens portion 103 (on the upper surface side of each lens portion 103) in the thickness position (Z direction), for example. A schematic view of FIG. 2 shows this configuration. FIG. 2 shows a lens main body 101 in the marker 100 of FIGs. 1A to 1C and is a cross-sectional view showing only a lens unit 102 having a lens portion 103. As shown in FIG. 2, light entering from the lens portion 103 is indicated by dotted lines, and when a point of intersection of the dotted line is a focal point, the detectable portion 105 can be configured such that it is arranged above the focal point of the lens portion 103 in the thickness direction.

The width of the detectable portion 105 can be determined as appropriate depending on the pitch between adjacent lens units 102, for example. The ratio between the width of the detectable portion 105 and the width of the pitch between the lens units 102 is, for example, 1 : 200 to 1 : 5. By setting the width of the detectable portion 105 so as to be relatively larger than the pitch between the lens units 102, a detected image can have relatively higher contrast, for example. On the other hand, by setting the width of the detectable portion 105 so as to be relatively smaller than the pitch between the lens units 102, the detectable portions can be detected with further improved sensitivity, for example.

In the present invention, the "pitch of the multiple detectable portions" means the pitch between adjacent detectable portions 105. In the detectable portions 105, the pitch between each adjacent pair of detectable portions 105 may be uniform or nonuniform, and preferably is uniform. In the marker 100, for example, the "pitch of the multiple detectable portions" in the arrangement direction is different from the "pitch of the multiple lens portions" in the arrangement direction.

The pitch between adjacent detectable portions 105 is, for example, the distance between the centers of the adjacent detectable portions 105 in the width direction X. The center of the detectable portion 105 is, for example, a midpoint in the width direction X and also a midpoint in the length direction Y.

The distance between the adjacent detectable portions 105 is different from the width of each lens unit 102, for example. The distance between the adjacent detectable portions 105 may be shorter than the width of each lens unit 102, or may be longer than the width of each lens unit 102, for example.

Each detectable portion 105 need only be optically detectable, and may be a colored film, for example. The color of the colored film is not particularly limited, and may be black, for example. The colored film may be, for example, a coating film, and can be formed of a coating material. The coating material is not particularly limited, and may be a liquid coating material or a powder coating material, for example. The coating film can be formed by coating and/or solidifying the coating material, for example. The coating method may be, for example, spray coating, screen printing, or the like. The solidifying method may be, for example, drying of the liquid coating material, curing of a curable component (e.g., a radical polymerizable compound or the like) in the coating material, baking of the powder coating material, or the like.

Each detectable portion 105 needs only be optically distinguishable, for example. The term "optically distinguishable" means that, for example, the detectable portions 105 can be detected with an optically significant difference as compared with regions other than the detectable portions 105. The term "optically significant difference" means that, for example, there is a significant difference with regard to optical characteristics. Examples of the optical characteristics include color properties such as lightness, saturation, and hue and the intensity of light such as luminance. The optically significant difference may be, for example, a difference that can be identified by visual observation or a difference that can be identified by an optical detection device such as a camera. When the detectable portions 105 emit fluorescence, for example, the optically significant difference may be a difference that can be identified by an operation such as light irradiation using a UV lamp.

The pattern formed by the detectable portions 105 is by no means limited. For example, when the pattern is the above-described stripe pattern, the density of the color forming the stripe pattern may be uniform, or the stripe pattern may contain color gradations, for example.

As shown in FIG. 1C, the lens main body 101 is arranged on the substrate 106 via the spacer 107. The substrate 106 is not particularly limited, and may be formed of a resin member, a glass member, or the like, for example. The surface of the substrate 106 on the lens main body 101 side preferably has a color by which colors of the detectable portions 105 in the lens main body 101 can be optically distinguished, for example. Specifically, when the colors of the detectable portions 105 are black, the color of the surface of the substrate 106 on the lens main body 101 side is, for example, white. The surface of the substrate 106 on the lens main body 101 side may or may not have a pattern, for example, and in the former case, the pattern preferably does not affect the detection of each detectable portion 105, and no pattern is more preferable.

The resin member may be, for example, a polycarbonate, an acrylic resin such as polymethyl methacrylate (PMMA), a cycloolefin polymer (COP), a cycloolefin copolymer (COC), or the like. The surface of the substrate 106 on the lens main body 101 side may be colored by molding a substrate of a colored resin or glass or by molding a substrate of a colorless resin or glass and thereafter coloring a surface of the substrate with a colorant, for example.

In the marker 100, the lens main body 101 is arranged on the substrate 106 via the spacer 107. Thus, for example, when the color of the surface of the substrate 106 on the lens main body 101 side is white, and the color of each detectable portion 105 is black, light entered from the upper surface of the lens main body 101 reaches and is absorbed in the detectable portion 105, is transmitted through the lens main body 101, and is reflected on the surface of the substrate 106. Accordingly, on the upper surface of the lens main body 101, images of the detectable portions 105 (e.g., black lines) are projected onto a white background of the substrate 106. The substrate 106 can also be referred to as a reflector, for example.

The size of the substrate 106 is not particularly limited, and the plane of the substrate 106 is, for example, the same as that of the lens main body 101. The thickness of the substrate 106 in the thickness direction X is not particularly limited.

In the marker of the present invention, the lens main body is arranged on the substrate, and a non-scattering layer is provided between the surface of the substrate on the lens main body side and the surface of the lens main body on the substrate side. The non-scattering layer may be, for example, a layer that does not substantially scatter light.

FIG. 1C illustrates a configuration of providing a non-scattering layer 108 between a substrate 106 and a lens main body 101 by laminating the lens main body 101 on the substrate 106 via a spacer 107.

The kind of the non-scattering layer 108 is not particularly limited, and examples thereof include an air layer, a water layer, and a transparent member layer. Examples of the transparent member layer include transparent resin layers of polymethyl methacrylate (PMMA), polycarbonate (PC), a cycloolefin copolymer (COC), and silicone. When the non-scattering layer 108 is an air layer, a gap formed between the substrate 106 and the lens main body 101 is the non-scattering layer 108, for example. When the non-scattering layer 108 is a water layer, the non-scattering layer 108 can be formed by introducing water into a gap formed between the substrate 106 and the lens main body 101, for example. When the non-scattering layer 108 is a transparent member layer, the substrate 106 and the lens main body 101 may be laminated via the transparent member layer, for example, and in this case, a spacer 107 in FIG. 1C may or may not be provided.

The height W of the non-scattering layer 108 in the thickness direction Z (thickness) is not particularly limited. The thickness W of the non-scattering layer 108 can be set relative to the focal length (fl) of each lens unit 102, for example. The lower limit of the height W of the non-scattering layer 108 is, for example, 0.4 times or more, 0.8 times or more, 1.2 times or more, 2 times or more, 4 times or more, 6 times or more, 8 times or more the focal length of each lens unit 102. The upper limit of the height W of the non-scattering layer 108 is, for example, not particularly limited from the viewpoint of preventing noises and is, for example, 8 times or less, 6 times or less from the viewpoint of the thickness of the product. The focal length of each lens unit 102 can be calculated from the thickness of each lens unit 102 in the thickness direction Z, the size and the curvature of the lens portions 103, the material of the lens units 102, and the like by a known method based on the common general technical knowledge, for example.

The thickness W of the non-scattering layer 108 can also be set relative to the lens thickness (t) of each lens unit 102, for example. The lower limit of the height W of the non-scattering layer 108 is, for example, 0.25 times or more, 0.5 times or more, 0.75 times or more, 1.25 times or more, 2.5 times or more, 3.75 times or more, or 5 times or more the lens thickness of each lens unit 102. The upper limit of the height W of the non-scattering layer 108 is, for example, not particularly limited from the viewpoint of preventing noises and is, for example, 5 times or less, 3.75 times or less the lens thickness of each lens unit 102 from the viewpoint of the thickness of the product. The lens thickness of each lens unit 102 is, for example, a thickness of a normal line passing through the apex of the lens portion 103 of each lens unit 102.

The spacer 107 is not particularly limited and may be intervened between the substrate 106 and the lens main body 101. The spacer 107 is not particularly limited and can be, for example, a resin member or a glass member as mentioned above. The spacer 107 may be arranged on the substrate 106 as an integrated product obtained by integrating with the lens main body 101 or may be arranged on the lens main body 101 as an integrated product obtained by integrating with the substrate 106, for example. The spacer 107 is, for example, a member different from the lens main body 101 and the substrate 106, and the lens main body 101 is arranged on the substrate 106.

A region in which the spacer 107 is arranged is not particularly limited and is, for example, a portion that does not affect the detection of the detectable portions 105 by the lens units 102 in the lens main body 101. As a specific example, the region is preferably located between the substrate 106 and the lens main body 101 and is located outside of a region in which the lens units 102 are arranged. The spacer 107 may be arranged on the entire circumference of the region in which the lens units 102 are arranged or a part thereof, for example. In the case of the marker 100 shown in FIGs. 1A to 1C, the spacer 107 may be arranged on the entire circumference of the region in which the lens units 102 are arranged, i.e., the outer periphery of the lens main body 101, for example.

The length of the spacer 107 in the thickness direction Z (thickness) is not particularly limited, can be set, as appropriate, according to the thickness of the non-scattering layer 108, and is the same as the thickness of the non-scattering layer 108, for example.

In the marker of the present invention, the size of each portion is not particularly limited. In the marker of the present invention, the size of each portion can be set as appropriate by, for example, setting the size of each lens unit.

A two-dimensional pattern code is not particularly limited, and may be, for example, an AR marker, a QR marker, or the like. Examples of the AR marker include ARToolKit, ARTag, CyberCode, and ARToolKit Plus. The two-dimensional pattern may be arranged on the substrate in the marker of the present invention, or the two-dimensional pattern and the marker of the present invention may be arranged on a main substrate, for example.

### Examples

A marker shown in FIGs. 1A and 1C was produced, and a reduction in ghost line was checked.

A lens main body 101 and a white substrate 106 satisfying the following conditions were prepared. In addition, as a spacer 107, a sheet (thickness: 0.175 mm) was prepared. Then, as a spacer 107, n number (n = 1, 2, 3, 4, 10, 15, 20) of the sheets were arranged on the outer periphery of the substrate 106, and a lens main body 101 was further laminated thereon, to provide each marker 100. In the marker 100, the thickness of the spacer 107 was the thickness of the non-scattering layer 108, and in the present examples, the non-scattering layer 108 was an air layer. Moreover, as a comparative example, a lens main body 101 was arranged directly on a substrate 106 without any spacer 107, to provide a marker.

Each marker was irradiated with light from the normal direction to the plane in a dark room, and each image projected on each lens portion 103 was checked. In the light irradiation, the distance (light irradiation distance) between the surface of the marker 100 and a light source was 120 cm, and an LED spot light was used as the light source.

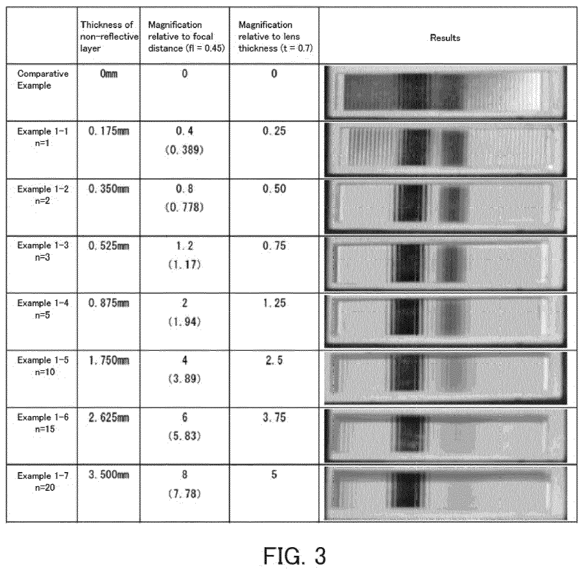

The results of these are shown in FIG. 3. As shown in FIG. 3, in the marker of the comparative example where the lens main body 101 was arranged directly on the substrate 106, ghost lines appeared as noises on the right side of thick detection target lines, and specifically, the background of the entire left half region was blackish. In contrast, in each of the markers of the examples where the non-scattering layer 108 was provided by intervening the spacer 107 between the substrate 106 and the lens main body 101, the detection target lines did not change, and the colors of ghost lines could be pale compared with those of the comparative example. In addition, the blackish background such as in the marker of the comparative example could be prevented in the markers of the examples. Specifically, the colors of ghost lines became paler as the height of the non-scattering layer 108 relative to the focal length of each lens unit 102 was increased, and the colors of the ghost lines could be sufficiently paler than those of the detection target lines by setting the height of the non-scattering layer 108 to be two times or more the focal length fl.

These results demonstrate that generation of ghost lines other than the detection target lines can be prevented by providing a non-scattering layer 108 between the substrate 106 and the lens main body 101.

### Industrial Applicability

As described above, the marker of the present invention includes the non-scattering layer between the lens main body and the substrate. Thus, generation of a ghost image as a noise such as mentioned above can be prevented, or the density (saturation) of the color of the ghost image can be reduced. Thus, the marker of the present invention can further improve detection accuracy.

This application claims priority to Japanese Patent Application No. 2016-250118, filed on December 22, 2016, the entire disclosure of which is incorporated herein by reference.

### Reference Signs List

- 100: marker
- 101: lens main body
- 102: lens unit
- 103: lens portion
- 104: recess
- 105: detectable portion
- 106: substrate
- 107: spacer
- 108: non-scattering layer

## Claims

1. A marker comprising:
a lens main body comprising multiple lens units; and
a substrate, wherein
the lens units comprise respective lens portions and are arranged successively in a planar direction of the lens main body.
the lens main body comprises the lens portions on one surface side and comprises multiple detectable portions that can be detected from the one surface side on the other surface side,
the lens main body is arranged on the substrate, and
the marker further comprises a non-scattering layer between a surface of the substrate on the lens main body side and a surface of the lens main body on the substrate side.

2. The marker according to claim 1, wherein
the lens main body comprises multiple recesses on the other surface side, and
the detectable portions are provided inside the respective recesses.

3. The marker according to claim 1 or 2, wherein
the non-scattering layer is at least one selected from the group consisting of an air layer, a water layer, and a transparent member layer.

4. The marker according to claim 3, wherein the transparent member layer is a transparent resin member.

5. The marker according to any one of claims 1 to 4, wherein
a thickness of the non-scattering layer is 0.4 times or more a focal length of each lens unit.

6. The marker according to claim 5, wherein
a thickness of the non-scattering layer is 2 times or more a focal length of each lens unit.

7. The marker according to any one of claims 1 to 6, wherein the lens units are each a cylindrical lens.

8. The marker according to any one of claims 1 to 7, wherein the lens main body is an integrally molded article of the lens units.

9. The marker according to any one of claims 1 to 8, wherein the lens main body is an injection molded article.
